Europäisches Patentamt

European Patent Office

Office européen des brevets

(11) Veröffentlichungsnummer: **0 284 983**

**A1**

# (12) EUROPÄISCHE PATENTANMELDUNG

(21) Anmeldenummer: 88104652.8

(51) Int. Cl.4: **A01D 46/02**

(22) Anmeldetag: 23.03.88

(30) Priorität: 01.04.87 CS 2275/87

(43) Veröffentlichungstag der Anmeldung:
05.10.88 Patentblatt 88/40

(84) Benannte Vertragsstaaten:
**BE DE FR GB**

(71) Anmelder: **AGROZET KONCERN
ZEMEDELSKEHO STROJIRENSTVI
Sumavska 31
Brno(CS)**

(72) Erfinder: **Albrecht, Zbynek, Dipl.-Ing.
Netusilova 1
Prostejov(CS)**

(74) Vertreter: **Patentanwälte Beetz sen. - Beetz
jun. Timpe - Siegfried - Schmitt-Fumian-
Mayr
Steinsdorfstrasse 10
D-8000 München 22(DE)**

(54) Speicher zur Aufnahme und Handhabung von Hopfenreben.

(57) Der erfindungsgemäße Speicher kann von einem Zugmittel auf ein Transportmittel umgesetzt werden, wobei er während der Füllung mit den Hopfenreben an ein Antriebselement 26 des Zugmittels 27 angekuppelt ist. Vom Transportmittel 24 kann er in den Zwischenspeicher 25 umgesetzt werden, an den die Hopfenreben 11 in hängender Position in umgekehrter Reihenfolge zur Einlegung übergeben werden.

Der Speicher enthält eine angetriebene Scheibe 8, welche in einem Rahmen 1 drehbar gelagert ist. Der Rahmen 1 trägt ein System von Rollen 4, 5, 6, welche zusammen mit einem Umfangsteil der Scheibe 8 von einer Endloskette 9 umschlungen sind, die einen Klemmbereich für das Einfangen der Enden 12 von Hopfenreben 11 bildet, welche fortlaufend den Speicher einfüllen.

FIG. 1

EP 0 284 983 A1

## Speicher zur Aufnahme und Handhabung von Hopfenreben

Bei der Ernte von Hopfenreben werden spezielle Beförderungsmittel für die Reben eingesetzt, auf die die Hopfenreben einzeln manuell oder mechanisch aufgelegt werden. Nach dem Transport zur Pflückmaschine müssen die Hopfenreben einzeln von Hand vom Transportwagen abgenommen und in einen Zwischenförderer bzw. direkt in die Pflückmaschine eingelegt werden. Der Nachteil liegt im hohen Arbeitsaufwand, in der anstrengenden und monotonen Arbeit und in der begrenzten Leistung der Erntestraße. Ferner werden beim manuellen Entladen und Einlegen der Reben wertvolle Pflanzenteile abgerissen und beschädigt. Die willkürliche Reihenfolge der Einlegung in die Pflückmaschine führt zu verschiedenen Störungen in der Arbeitskontinuität der Straße.

Es sind auch verschiedene Anordnungen bekannt, bei denen die Reben bei der Ernte in die einzelnen Aufnahmen befestigt werden, aber eine selbsttätige Entleerung der Reben aus diesen Aufnahmen ist nicht sichergestellt oder erfordert eine komplizierte Einrichtung.

Der Zweck der Erfindung liegt in der Beseitigung der bisherigen Nachteile und Mängel, in einer Verminderung des Arbeitsaufwands bei der Rebenernte und bei der selbsttätigen Dosierung der Reben in die Pflückmaschine.

Gemäß der Erfindung ist der Speicher für eine Einrichtung zum Abschneiden, Niederreißen zur Beförderung und zur Dosierung von Hopfenreben in die Pflückmaschine konzipiert, wobei der Speicher nach dem Transport der Hopfenreben zu der ortsfesten Straße vom Beförderungsmittel abmontiert und an den Zwischenspeicher angebaut werden kann, so daß die auf dem Beförderungsmittel gelagerten Hopfenreben in der bestimmten Reihenfolge selbsttätig an den Zwischenspeicher der Pflückmaschine übergeben werden.

Der erfindungsgemäße Speicher dient zur selbsttätigen fortschreitenden Befestigung der abgeschnittenen Hopfenrebenenden in der geernteten Reihenfolge. Diese Hopfenreben werden im Speicher bei der Ernte und beim Rebentransport zu der ortsfesten Straße dauerhaft gehalten. Der Speicher hält die Reben auch beim Anheben aus ihrer horizontalen Lage auf dem Transportmittel in die hängende Lage im Zwischenspeicher vor der Pflückmaschine mit der Dosierungsvorrichtung. Der Speicher ist gleichzeitig für die selbsttätige Rebendosierung in die Pflückmaschine gestaltet.

Das Wesen der Erfindung liegt darin, daß der Speicher als eine umstellbare Gesamtheit ausgebildet ist bestehend aus einer in einem Rahmen drehbar gelagerten Scheibe, welche mit einer Mündungsrolle, mit den äußeren Führungsrollen, mit einer Wenderolle, mit den Aufnahmen und mit mindestens einer Auflagefläche versehen ist und daß die Scheibe auf ihrem Umfang mit mindestens einer Umfangsrille versehen ist, von denen jede teilweise mit einer endlosen Kette, bzw. mit einem Band, einem Seil u.ä. versehen ist, womit zwischen der Umfangsrille und der umschlingenden Kette eine Klemmstelle für das Einfangen der Enden der Hopfenreben ausgebildet ist, wobei die Kette weiter mittels der Mündungsrolle, der Führungsrollen und der Wenderolle geführt ist und die Scheibe auf der Welle mit den Mitnehmern für einen unterbrechbaren Eingriff mit dem Antriebsgegenglied angeordnet ist, das aus dem Zugmittel und auf dem Zwischenspeicher untergebracht ist.

Ein vorteilhaftes Merkmal liegt darin, daß die Welle der Scheibe in dem Zentrallager des Rahmens frei drehbar gelagert ist.

Zur Vermeidung von mühevoller Handarbeit ist zwischen der Mündungsrolle, welche mit der endlosen Kette in einem Winkel, der größer als 180° ist, umschlungen ist, und dem gegenüberliegenden Teil der Umfangsrille eine Mündung für die einfache Einlegung der Hopfenreben in den Speicher und für ihren Austritt aus dem Speicher ausgebildet ist.

Gemäß der Erfindung sind die Aufnahmen und mindestens eine Auflagefläche für die Stellungssicherung des Rahmens auf dem Zugmittel, auf dem Beförderungsmittel und in dem Zwischenspeicher angeordnet.

Für die Verbesserung der Funktion ist in der Umfangsrille eine austauschbare und weiche Einlage angeordnet und die Länge der Klemmstelle entspricht der Größe des Umschlingungswinkels der Kette auf der Scheibe, welcher größer als 250° ist.

Ein weiteres Merkmal der Erfindung bildet die Wirklichkeit, daß die Mitnehmer als Nuten oder Öffnungen ausgebildet sind.

Im folgenden wird ein bevorzugtes Ausführungsbeispiel der Erfindung anhand der schematischen Zeichnungen im einzelnen beschrieben. Es zeigen:

Fig. 1 den Speicher in Stirnansicht,
Fig. 2 den Speicher im Querschnitt,
Fig. 3 den Speicher auf einem Beförderungsmittel in einer Transportstellung und
Fig. 4 den Speicher neben einem Zwischenspeicher zur Einführung der Reben in die Pflückmaschine.

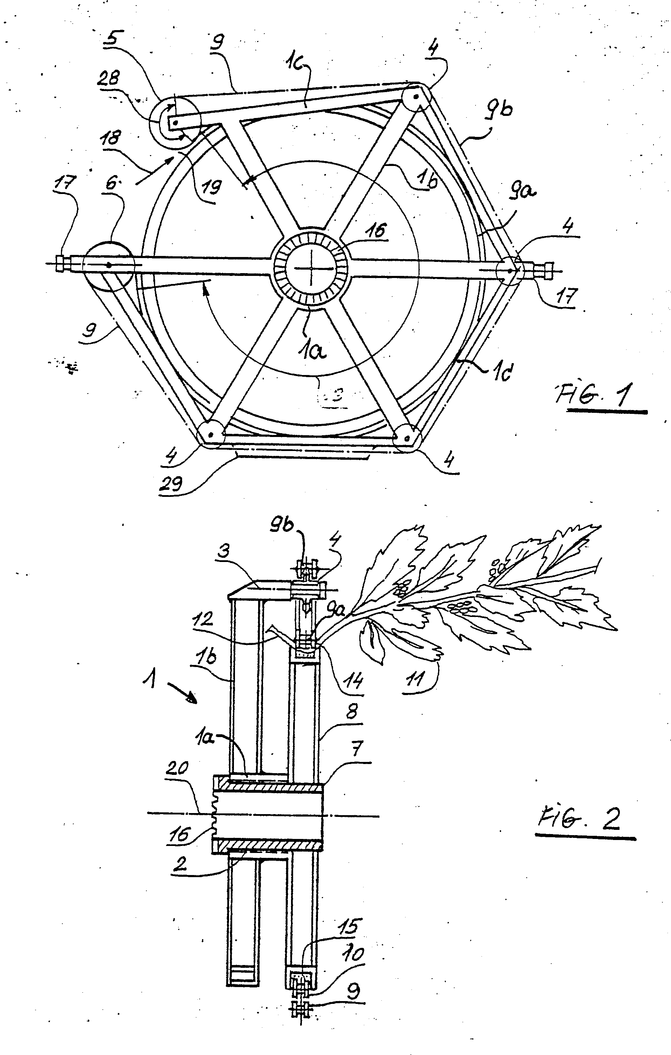

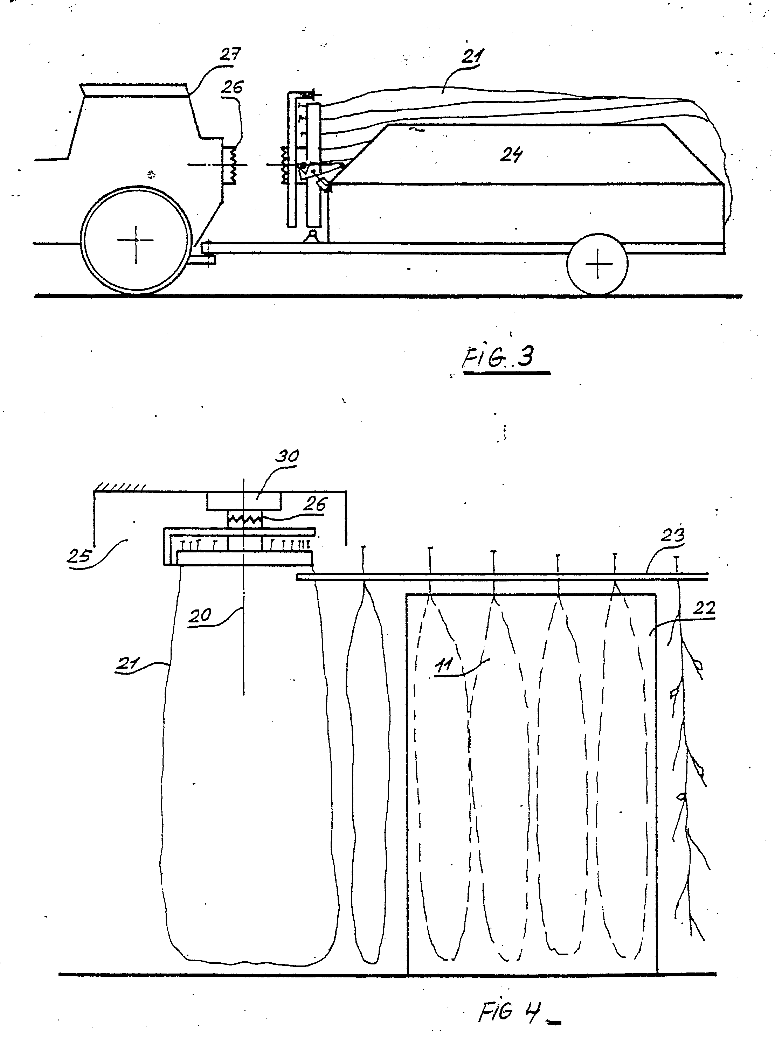

Der in den Fig. 1 und 2 dargestellte Speicher enthält einen Rahmen 1 aus einer zentralen Buchse 1a, sternförmigen Radialstreben 1b und Verbindungsstreben 1c, welche die äußeren Enden von jeweils zwei Radialstreben 1b miteinander fest verbinden. Im Einlaufabschnitt fehlt eine Verbindungsstrebe und die erste Verbindungsstrebe 1c ist über ihren Anschluß an die verkürzte erste Radialstrebe 1b hinaus verlängert. An den äußeren Enden der Radialstreben 1b sind achsparallele Querzapfen 3 befestigt, auf deren freien Enden Rollen oder Zahnräder 4 gelagert sind. Auf dem verlängerten freien Ende der ersten Verbindungsstrebe 1c sind eine Einführrolle 5 und am Ende der letzten Radialstrebe 1b eine Wenderolle 6 gelagert.

Die Buchse 1a des Rahmens 1 sitzt drehbar auf einem Zentrallager 2, dessen Hohlwelle 7 eine Kreisscheibe 8 trägt. Die Größe der Scheibe 8 ist so gewählt, daß sich die Führungsrolle 5, die Rollen 4 und die Wenderolle 6 in einem bestimmten radialen Abstand außerhalb des Scheibenumfangs über der radialen Scheibenebene befinden. Ein endloses Treibelement, z.B. eine Endloskette 9, umschlingt mit ihrem radialen Innentrum 9a die Scheibe 8 in dem von der Einführrolle 5 und der Wenderolle 6 begrenzten Winkelbereich 13 und läuft mit ihrem Außentrum 9b über die Einführrolle 5, die Rollen 4 und die Wenderolle 6. Der Umschlingungswinkel 28 der Endloskette 9 auf der Einführrolle 5 ist größer als 180°. Zur Führung des Innentrums der Endloskette weist die Scheibe 8 eine Umfangsrille 10 auf, in der eine weiche Einlage 15 austauschbar angeordnet ist.

Zwischen der Einführrolle 5 bzw. dem Innentrum und der Scheibe 6 ist eine spaltförmige Öffnung 19 zum Einziehen und Ausgeben der Hopfenreben 11 in und aus dem Speicher vorgesehen. Der Stengel 12 der jeweiligen Hopfenrebe 11 wird quer in die Spaltöffnung 19 eingelegt und zwischen dem Innentrum 9a der Endloskette 9 und dem Scheibenumfang festgeklemmt - vgl. die Klemmstelle in Fig. 2. Durch eine Drehbewegung der Scheibe 8 mit synchronem Umlauf der Endloskette 9 wird die Hopfenrebe 11 in den durch den Winkelbereich 13 in Fig. 1 definierten Speicherabschnitt transportiert, der zur Erzielung einer ausreichenden Kapazität größer als 250° sein sollte. Die Umfangsrille 10 der Scheibe 8 und das Innentrum 9a der Endloskette 9 bilden auf diese Weise eine wirksame Klemmhalterung für eine große Anzahl von Hopfenreben 11.

Für den Drehantrieb der Scheibe 8 sind an der Hauptwelle 7 Kupplungselemente 16, z.B. Mitnehmerklauen, vorgesehen, mit denen die Hauptwelle 7 mit einem Antriebsgegenglied 26, eines Zugmittels 27 und/oder eines Zwischenspeichers 25 verbunden werden kann. Anstatt der Mitnehmerklauen ist auch ein System von Nuten, Öffnungen oder eine Reibungskupplung anwendbar.

Am Rahmen 1 sind Zapfen 17 und Auflager 29 an geeigneten Stellen angeordnet, die für seine Halterung und Verbindung mit dem Zugmittel 27 bei der Rebenernte, mit dem Transportmittel 24 beim Rebentransport und mit dem Zwischenspeicher 25 bei der selbsttätigen Dosierung der Hofenreben 11 in die Pflückmaschine 22 dienen.

In einer alternativen Ausführung ist die Scheibe 8 mit mehreren gleichlaufenden Umfangsrillen 10 angeordnet, in denen mehrere Ketten 9 gelagert sind. Statt der Ketten 9 können auch Bänder, Seile od.dgl. verwendet werden.

Die Arbeitsweise des vorstehend beschriebenen Speichers ist folgende:

Bei der Ernte der Hopfenreben 11 durch die nicht dargestellte Schneidemaschine werden die abgeschnittenen Stengel 12 der Hopfenreben 11 fortlaufend in Pfeilrichtung 18 in die Spaltöffnung 19 in der Nähe der Mündungsrolle 5 eingelegt. Die Achse 20 der Welle 7 verläuft dabei horizontal und auch die Hopfenreben 11 werden horizontal auf dem Transportwagen 24 abgelegt. Der Speicher ist dabei mittels der Zapfen 17 und dem Auflager 29 mit dem Zugmittel 27 verbunden und die Welle 7 steht über den Mitnehmer 16 in Eingriff mit dem Antriebsgegenglied 26 des Zugmittels 27. Durch die Einlegung von weiteren abgeschnittenen Enden 12 der Hopfenreben 11 wird fortschreitend die Klemmstelle 14 so gefüllt, daß die Hopfenreben 11 in dem ganzen Umschlingungsbereich 13 festgehalten werden.

Nach dem Füllen des Speichers mit den Hopfenreben 11 wird der Mitnehmer 16 vom Antriebsgegenglied 26 gelöst und der Speicher wird von dem Zugmittel 27 abmontiert und auf dem Transportwagen 24 hochkant eingespannt. Der Speicher wird auf dem Wagen 24 zur Pflückmaschine 22 transportiert und an den Zapfen 17 zusammen mit dem Bündel 21 der Hopfenreben 11 angehoben und im Zwischenspeicher 25 eingespannt, so daß seine Achse 20 und die Hopfenreben 11 senkrecht verlaufen (Fig. 4).

Für die selbsttätige Dosierung der Hopfenreben 11 in die Pflückmaschine 22 wird der Speicher mittels der Mitnehmer 16 der Welle 7 an das Antriebsgegenglied 26 der Antriebsvorrichtung 30 angeschlossen und die Spaltöffnung 19 vor dem Einlauf des Dosierförderers 23 eingestellt.

Durch die Einschaltung des Antriebs der Scheibe 8 in entgegengesetzter Drehrichtung werden die Hopfenreben 11 von der Klemmung 14 ausgetragen und selbsttätig an den Dosierförderer 23 übergeben, welcher die Hopfenreben 11 zu der Pflückmaschine 22 befördert.

Nach der vollständigen Entleerung der Hopfenreben 11 wird der Speicher mittels der Zapfen 17 und einer Hubeinrichtung wieder auf das Zugmittel 27 gestellt, wo er mittels der Zapfen 17 und der Auflager 29 in einer Stellung befestigt wird, in der die Welle 7 und ihre Achse 20 wieder horizontal liegen. Dadurch ist die Garnitur mit dem Speicher zur Aufnahme eines weiteren Bündels 21 von Hopfenreben 11 vorbereitet. Der Speicher ist auch für die Ernte von anderen Materialien und Produkten geeignet.

Die Erfindung ist nicht auf das dargestellte, besonders bevorzugte Ausführungsbeispiel beschränkt. So kann die Scheibe 8 auch als anders geformter Rotationskörper, z.B. als Trommel, Speicherrad od. dgl., ausgebildet sein. Zur Klemmhalterung der Hopfenstengel können im oder am Rotationskörper achsparallele Ausnehmunge, zangen- oder keilförmige Klemmhalter oder andere geeignete Greif- und Halteorgane vorgesehen sein, die eine sichere Halterung der abgeschnittenen Rebenstengel und deren einfaches Lösen bei der Übergabe der Reben an den Zwischenspeicher ermöglichen. Das Öffnen dieser Greif- und Halteorgane kann mit mechanischer Unterstützung z.B durch Anfahren an Anschläge erfolgen.

## Ansprüche

1. Speicher zur Aufnahme und Handhabung von Hopfenreben,
**gekennzeichnet durch**
einen Rahmen (1) mit Halterungen (17, 29) zur lösbaren Montage auf einem Zugmittel (27), auf einem Transportwagen (24) oder an der Tragkonstruktion (30) eines Zwischenspeichers (23) und
einen in Rahmen (1) drehbar gelagerten und mit einem äußeren Antriebsglied (26) kuppelbaren Rotationskörper (8), der eine Vielzahl von Halterungen (14) für die Stengel von abgeschnittenen Hopfenreben aufweist.

2. Speicher nach Anspruch 1, gekennzeichnet durch mehrere am Rahmen (1) angeordnete Führungselemente (4, 5, 6) und durch ein flexibles endloses mit einer Einlaufrolle (5) eine Einziehöffnung (19) bildendes Zugelement (9), dessen Innentrum (9a) auf dem Außenumfang des scheibenförmigen Rotationskörpers (8) mit Klemmdruck aufliegt und dessen Außentrum (9b) mit radialem Abstand zur Scheibe (8) über die Führungselemente (4, 6) läuft.

3. Speicher nach Anspruch 1, dadurch gekennzeichnet, daß der Rotationskörper (8) an seinem Außenumfang achsparallele Ausnehmungen mit Klemmhaltern zum Einlegen und Festklemmen der Hopfenstengel aufweist.

4. Speicher nach einem der Ansprüche 1 bis 3, dadurch gekennzeichnet, daß die Welle (7) der Scheibe (8) in einem Zentrallager (2) des Rahmens (1) frei drehbar gelagert ist und Mitnehmer (16) in Form von Stirnklauen zum Ankuppeln an das äußere Antriebsglied (26) aufweist.

5. Speicher nach einem der Ansprüche 1, 2 und 4, dadurch gekennzeichnet, daß zwischen der vom endlosen Zugelement (9) in einem Winkel (28) von über 180° umschlungenen Mündungsrolle (5) und dem gegenüberliegenden Teil einer Umfangsrille (10) der Scheibe (8) eine Mündung (19) zum Einführen der Hopfenreben (11) in den Speicher und für ihren Austritt aus dem Speicher ausgebildet ist.

6. Speicher nach einem der Ansprüche 1 bis 4, dadurch gekennzeichnet, daß zapfenförmige Aufnahmen (17) und mindestens ein Auflager (29) zur Montage des Rahmens (1) an einem Zugmittel (26), an einem Transportwagen (24) und an einem Zwischenspeicher (25) vorgesehen sind.

7. Speicher nach einem der Ansprüche 1 bis 5, dadurch gekennzeichnet, daß in der Umfangsrille (10) der Scheibe (8) eine austauschbare weiche Einlage (15) angeordnet ist.

8. Speicher nach einem der Ansprüche 2 und 4 bis 6, dadurch gekennzeichnet, daß der Klemmbereich (14) dem Umschlingungswinkel (13) der Kette (9) auf der Scheibe (8) entspricht und größer als 250° ist.

9. Speicher nach einem der Ansprüche 1 bis 8, dadurch gekennzeichnet, daß der Rahmen (1) eine auf der Welle (7) über ein Zentrallager (2) gelagerte Buchse (1a) und mehrere axial neben dem Rotationskörper (8) angeordnete Radialstreben (1b) enthält, deren freie Enden durch Verbindungsstreben (1c) in Umfangsrichtung verbunden sind und Querbolzen (3) für die Führungselemente (4, 5, 6) tragen.

FIG. 1

FIG. 2

FIG. 3

FIG 4

**Europäisches Patentamt**

# EUROPÄISCHER RECHERCHENBERICHT

Nummer der Anmeldung

EP 88 10 4652

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-3 424 517 (SOLLER)<br>* Seiten 8,9; Abbildungen 1-5 *<br>--- | 1-3,7 | A 01 D 46/02 |
| A | DE-A-2 237 320 (WOLF)<br>* Seite 5 - ende; Seite 6; Abbildungen 1-3 *<br>----- | 1 | |

| | RECHERCHIERTE SACHGEBIETE (Int. Cl.4) |
|---|---|
| | A 01 D |

Der vorliegende Recherchenbericht wurde für alle Patentansprüche erstellt

| Recherchenort | Abschlußdatum der Recherche | Prüfer |
|---|---|---|
| DEN HAAG | 20-06-1988 | VERMANDER R.H. |